Europäisches Patentamt

(19) European Patent Office

Office européen des brevets

(11) Veröffentlichungsnummer: **0 336 928**

**A2**

(12) **EUROPÄISCHE PATENTANMELDUNG**

(21) Anmeldenummer: **89890097.2**

(22) Anmeldetag: **07.04.89**

(51) Int. Cl.⁴: **B 64 F 1/32**

(30) Priorität: 08.04.88 AT 915/88

(43) Veröffentlichungstag der Anmeldung:
11.10.89 Patentblatt 89/41

(84) Benannte Vertragsstaaten: **DE FR GB IT**

(71) Anmelder: **Zellinger Gesellschaft m.b.H.**
**Kremstalstrasse 102**
**A-4050 Traun (AT)**

(72) Erfinder: **Kock, Josef**
**Maderspergerstrasse 17**
**A-4050 Traun (AT)**

**Zellinger, Hans**
**Rosenau 16**
**A-4271 St. Oswald b. Freistad (AT)**

(74) Vertreter: **Hübscher, Heiner, Dipl.-Ing. et al**
**Patentanwälte Dipl.-Ing. Gerhard Hübscher, Dipl.-Ing.**
**Helmut Hübscher Dipl.-Ing. Heiner Hübscher**
**Spittelwiese 7**
**A-4020 Linz (AT)**

(54) **Hubfahrzeug, insbesondere für die Ver- und Entsorgung von Flugzeugen.**

(57) Ein Hubfahrzeug, insbesondere für die Ver- und Entsorgung von Flugzeugen, besitzt ein Fahrgestell (1), ein Fahrerhaus (2) und einen hinter dem Fahrerhaus (2) angebrachten Lastbehälter (3), der mittels eines von druckmittelbeaufschlagten Stelltrieben betätigten Scherenhubwerkes (4, 5) über die Höhe des Fahrerhauses hinaus anhebbar ist. Am Fahrgestell (1) bzw. Lastbehälter (3) sind die fahrerhausseitigen Enden der Scherenschenkel (4, 5) angelenkt und die vom Fahrerhaus (2) abweisenden Enden der Scherenschenkel sind an Längsführungen (12, 13) verstellbar gelagert. Es ist ein mit dem Lastbehälter (3) heb- und senkbarer, teleskopisch über das Fahrerhaus (2) ausschiebbarer Ladeausleger (14) vorgesehen. Zur Erhöhung der Betriebssicherheit und der Stabilität bei ausgefahrenem Scherenhubwerk ist eine die Schere (4, 5) des Scherenhubwerkes in wenigstens einer Ausfahrstellung gegen Einfahren sichernde Stütze (17) vorgesehen, die aus einem an dem einen Scherenschenkel (5) in ihre Arbeitstellung ausschwenkbaren Distanzhalter besteht, der in seiner Arbeitsstellung mit einem am anderen Scherenschenkel (4) an der gleichen Seite des Scherengelenkes (6) angebrachten Anschlag (19) zusammenwirkt. Der Distanzhalter (17) kann bei ausgefahrenem Ladeausleger (14) über einen Stelltrieb (18) in die Arbeitsstellung ausschwenkbar sein.

FIG. 2

EP 0 336 928 A2

Beschreibung

## Hubfahrzeug, insbesondere für die Ver- und Entsorgung von Flugzeugen

Die Erfindung betrifft ein Hubfahrzeug, insbesondere für die Ver- und Entsorgung von Flugzeugen, mit einem Fahrgestell, einem Fahrerhaus und einem hinter dem Fahrerhaus angebrachten Lastbehälter od. dgl., der mittels eines von druckmittelbeaufschlagten Stelltrieben betätigten Scherenhubwerkes über die Höhe des Fahrerhauses hinaus anhebbar ist, wobei am Fahrgestell bzw. Lastbehälter die fahrerhausseitigen Enden der Scherenschenkel angelenkt und die vom Fahrerhaus abweisenden Enden der Scherenschenkel an Längsführungen verstellbar gelagert sind und vorzugsweise ein zumindest mit dem über das Fahrerhaus angehobenen Lastbehälter heb- und senkbarer, teleskopisch über das Fahrerhaus ausschiebbarer Ladeausleger vorgesehen ist.

Bei für die Ver- und Entsorgung von Flugzeugen bestimmten Hubfahrzeugen ist der Lastbehälter meist als Ladekoffer ausgebildet, der die zu transportierenden Güter vorzugsweise in fahrbaren Containern, sogenannten Trolleys, aufnimmt. Es sind Hubfahrzeuge bekannt, bei denen der Ladeausleger zur Gänze in den Lastbehälter versenkbar und aus diesem zum Andocken an das Flugzeug od. dgl. bei angehobenem Lastbehälter über Stelltriebe teleskopisch ausschiebbar ist. Bei anderen Hubfahrzeugen ist oberhalb des Fahrerhauses eine Ladeplattform auf- und abbewegbar angebracht, die beim Anheben des Ladekoffers von diesem über Mitnehmer mitgenommen wird, wobei sie sich dann auf gleicher Höhe mit dessen Boden befindet und die einen meist schmäleren durch Schwenken oder Ver schieben wenigstens über die Breite dieser Ladeplattform verstellbaren Ladeausleger trägt, der in seiner Länge teleskopisch einstellbar sein kann. Damit verhältnismäßig tief angebrachte Ladeöffnungen von Flugzeugen erreichbar werden, ist es auch bekannt, des Oberteil des Fahrerhauses einschiebbar anzubringen, was im Normalfall nur bei unbesetztem Fahrerhaus möglich ist.

Durch Fehlbetätigungen der Steuereinrichtungen, durch Versagen von Steuerorganen oder durch Leitungsbruch kann es vorkommen, daß das Scherenhubwerk abgesenkt wird, während der Ladeauslager noch ausgefahren ist bzw. sich noch Bedienungspersonal im Ladekoffer, auf der Ladeplattform oder im Ladeausleger befindet. Es besteht dann die Gefahr, daß der Ladeausleger auf das Fahrerhaus aufschlägt bzw. Personen, die sich am Übergang von Ladeplattform und Ladekoffer befinden, durch das weitere Absenken des Lastbehälters unter die Höhe des Fahrerhauses gefährdet werden.

Aufgabe der Erfindung ist es, eine einfache Einrichtung zu schaffen, durch die auch bei Fehlbedienungen, Fehlsteuerungen oder Steuerungs- bzw. Leitungsfehlern Beschädigungen am Fahrzeug, an Fahrzeugteilen und eine Gefährdung des Bedienungspersonals bei solchen Fehlern verhindert wird.

Die gestellte Aufgabe wird dadurch gelöst, daß eine die Schere des Scherenhubwerkes in wenigstens einer Ausfahrstellung gegen Einfahren sichernde Stütze, insbesondere ein an dem einen Scherenschenkel ein- und die Arbeitsstellung ausschwenkbar gelagerter, mit einem am anderen Scherenschenkel an der gleichen Seite des Scherengelenkes angebrachten Anschlag zusammenwirkender Distanzhalter vorgesehen ist, wobei vorzugsweise der Distanzhalter über einen eigenen Stelltrieb bei ausgefahrenem Ladeausleger in die Arbeitsstellung ausschwenkbar ist.

Bei der einfachsten Ausführung verhindert die in der Sicherungsstellung befindliche Stütze ein Absenken des Lastbehälters unter die Höhe des Fahrerhauses, wobei auch hier noch ein Sicherheitsabstand eingehalten werden kann. Es wird dadurch bei vorkommenden Fehlern ein Aufschlagen des Auslegers auf das Fahrerhaus bzw. ein weiteres Absenken des Lastbehälters nachdem der Ausleger die Höhe des Fahrerhauses erreicht hat, sicher verhindert. Die Stütze kann auch als Arbeitsstütze zur zusätzlichen Stabilisierung des ausgefahren aus Scherenhubwerk und Lastbehälter bestehenden Systems in einer oder mehreren Arbeitsstellungen verwendet werden, für welchen Zweck man dann vorzugsweise eine auf mehrere Gegenanschläge einstellbare Stütze zur Bestimmung der verschiedenen Stützhöhen vorsehen wird. Neben der bevorzugten Ausführung mit aus einem Scherenschenkel ein- und ausschwenkbaren Distanzhalter kann man auch Stützen vorsehen, die über die Längsführungen ausstellbar sind und beim Absenken des Scherenhubwerkes eine Weiterverstellung des verstellbaren Scherenschenkels und damit ein weiteres Absenken des Scherenhubwerkes verhindern.

Vorzugsweise sind die Scherenschenkel des Scherenhubwerkes in bekannter Weise leiterartig mit zwei durch Querverbindungen zusammengehaltenen Holmen aufgebaut, wobei die verstellbaren Scherenschenkelenden über durchgehende Querachsen verbunden sind, auf denen Führungsrollen lagern, mit denen sich die Scherenschenkelenden an den Längsführungen abstützen. Hier ist nach einer weiteren Ausgestaltung des Erfindungsgegenstandes der als Stütze ausgebildete Distanzhalter an einer Querachse des einen verstellbar geführten Scherenschenkelendes aus dem Scherenschenkel ausklappbar gelagert und der Gegenanschlag aus einer entsprechenden Querachse am anderen, verstellbar geführten Scherenschenkelende gebildet, wobei die Stütze an ihrem freien Ende Aufnahmen für diese den Anschlag bildende Querachse trägt.

Nach einer Weiterbildung ist für den den Ladeauslager verstellenden Stelltrieb und den Stelltrieb des Distanzhalters eine gemeinsame Steuereinrichtung vorgesehen, die beim Ausfahren des Ladeauslegers den Stelltrieb des Distanzhalters im Sinne des Ausschwenkens in die Arbeitstellung und nur bei voll eingefahrenem Ladeausleger im Sinne der Rückstellung ansteuert.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen

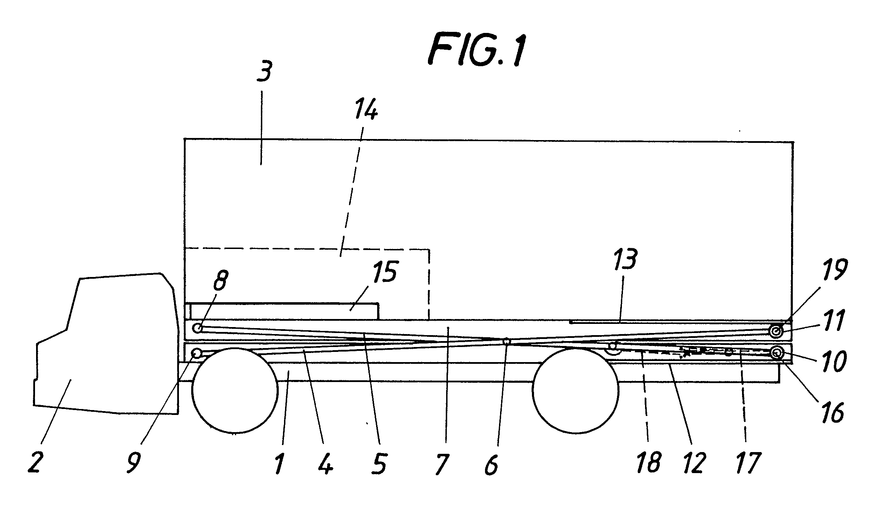

Fig. 1 schematisiert in Seitenansicht ein Hubfahrzeug in der Fahrstellung und

Fig. 2 das Hubfahrzeug bei angehobenem Lastbehälter, ausgefahrenem Ladeausleger und in der Sicherungsstellung eingerasteter Stütze.

Das dargestellte Hubfahrzeug besitzt ein Fahrgestell 1, an dem vorne ein tief gesetztes Fahrerhaus 2 angebracht ist. Hydraulisch ausfahrbare Standstützen zur zusätzlichen Abstützung des Fahrgestelles beim Anheben eines als Ladekoffer 3 ausgebildeten Lastbehälters können vorgesehen sein, wurden aber nicht dargestellt.

Der Ladekoffer 3 ist über ein Scherenhubwerk 4, 5 hebbar am Fahrgestell angebracht. Dieses Scherenhubwerk besitzt eine Schere aus den Scherenschenkeln 4, 5, die leiterartig aus Seitenholmen und Quersprossen aufgebaut sein können, wobei an den Schenkelenden Querachsen als Endsprossen vorhanden sind. Die Scherenschenkel 4, 5 sind über ein Scherengelenk 6 verbunden. Fahrerhausseitig sind die Scherenschenkel 4, 5 mit ihren Enden am Fahrgestell 1 und an einem unteren Trägerteil 7 des Ladekoffers 3 um Querachsen 8, 9 schwenkbar gelagert. Die vom Fahrerhaus 2 abweisenden Enden der Scheren schenkel tragen Laufrollen 10, 11, mit denen sie auf Längsführungen 12, 13 des Fahrgestelles 1 bzw. des Bodens des Ladekoffers 3 verstellbar sind. Zu beiden Seiten des Scherengelenkes 6 sind zwischen den Schenkeln 4, 5 hydraulisch, gegebenenfalls auch pneumatisch betätigbare (nicht dargestellte) Stelltriebe zum Aus- und Einfahren des Scherenhubwerkes 4, 5 angebracht. Der Ladekoffer kann über das Scherenhubwerk z. B. 5 m über die Standfläche des Fahrzeuges angehoben werden.

Beim Ausführungsbeispiel ist aus dem Ladekoffer 3 nach vorne ein Ladeausleger 14 mittels eines Stelltriebes 15 ausschiebbar, der gegebenenfalls teleskopisch aus mehreren gegeneinander verschiebbaren Abschnitten besteht und ein Andocken an eine Ladeöffnung eines Flugzeuges ermöglicht.

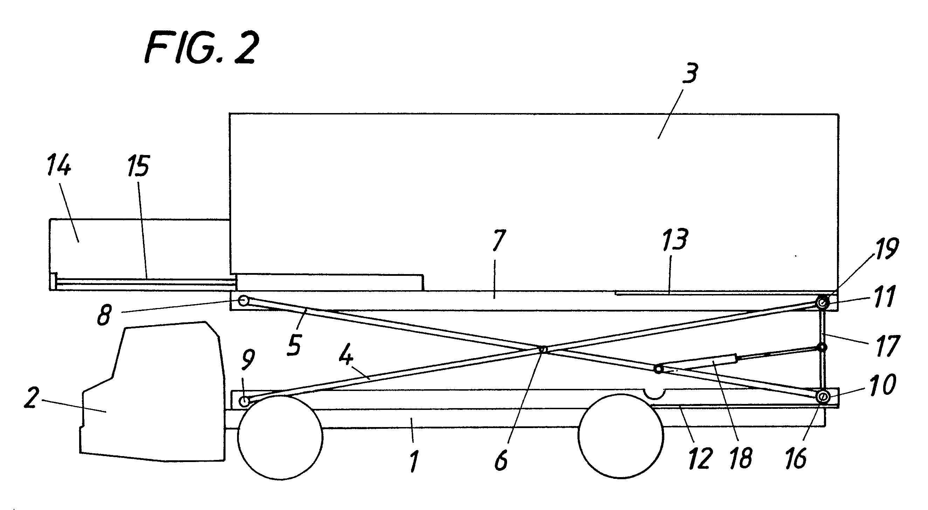

Zwischen den Laufrollen 10 ist auf der Achse 16 eine Stütze 17 schwenkbar gelagert, für die ein eigener pneumatischer oder hydraulischer Stelltrieb 18 vorgesehen ist. In der Ruhestellung ist die Stütze 17 bei eingefahrenem Stelltrieb 18 zwischen den Holmen im Scherenschenkel 5 versenkt. Wird bei ganz oder teilweise angehobenen mit seinem Boden über des Fahrerhaus 2 befindlichem Ladekoffer 3 der Ausleger 14 ausgefahren, so wird über die die Beaufschalgung des Stelltriebes 15 steuernde Steuereinrichtung auch der Stelltrieb 18 beaufschlagt, so daß er die Stütze 17 in die in Fig. 2 dargestellte Relativschwenkstellung zum Scherenschenkel 5 ausschwenkt. Die Steuerung ist dabei so eingestellt, daß der Stelltrieb 18 erst wieder bei voll eingefahrenem Ladeausleger 14 im Einfahrsinn beaufschlagt werden kann und dann die Stütze 17 einklappt.

Wird das Scherenhubwerk 4, 5 bei noch ausgefahrenem Ladeausleger 14 im Einfahrsinn beaufschlagt oder kommt es durch Leitungsbruch, Versagen der Förderpumpe, eines Steuerventiles oder der Steuereinrichtung selbst zu einem Absenken des Scherenhubwerkes und damit des Ladekoffers 3, dann befindet sich die Stütze 17 in der in Fig. 2 dargestellten Wartestellung und die obere Querachse 19 der Laufrollen 11 kann in am oberen Ende der Stütze vorgesehene Aufnahmen einrasten, bevor noch der Ausleger 14 auf das Fahrerhaus 2 auftrifft. Die Stütze 17 hält damit das Scherenhubwerk in der in Fig. 2 dargestellten Lage. Ein weiteres Absenken des Ladekoffers 3 ist erst möglich, nachdem das Scherenhubwerk 4, 5 bis zur Lösung der Achse 19 von den Aufnahmen der Stütze 17 angehoben und der Ausleger 14 eingefahren wurde.

Nach einer Variante kann man eine Notsteuereinrichtung vorsehen, die im wesentlichen aus einer über ein Drei- oder Mehrwegeventil schließbaren Leitungsverbindung zwischen den Zylindern der Stelltriebe des Scherenhubwerkes 4, 5 und den Zylindern der Stelltriebe 15, 18 besteht. In diesem Fall wird bei Ausfallen der Druckmittelversorgung der durch das Gewicht des Ladekoffers 3 erzeugte Druck in den Stelltrieben des Scherenhubwerkes zum Einfahren des Auslegers 14 ausgenützt, wobei man nach dem Einfahren des Auslegers 14 über den Stelltrieb 15 auch den Stelltrieb 18 im Einfahrsinn beaufschlagen und damit die Stütze 17 einschwenken kann.

Beim Ausführungsbeispiel ist die Stütze 17 zwischen den Achsen 16 und 19 anbringbar. Die Stütze könnte auch an anderer Stelle, beispielsweise liegend zwischen zwei Scherenschenkeln 4, 5 an der gleichen Seite des Scherengelenkes 6 angebracht werden. Man könnte auch eine Stütze vorsehen, die in Längsabständen Aufnahmen für Gegenrasten an dem mit ihr in Eingriff bringbaren Scherenschenkel besitzt, so daß das Scherenhubwerk mit Hilfe der Stütze in mehreren Stellungen feststellbar wird. Schließlich kann zur Betätigung der Stütze 17 auch ein mechanischer oder elektrischer Stelltrieb Verwendung finden. Nach einer anderen Möglichkeit sieht man eine Ausstellfeder für die Stütze vor und verwendet einen Stelltrieb, der dann auch von einem Seilzug oder Hebelwerk gebildet werden kann, nur dazu, um die Stütze in die Ruhestellung zurückzustellen.

**Patentansprüche**

1. Hubfahrzeug, insbesondere für die Ver- und Entsorgung von Flugzeugen, mit einem Fahrgestell (1), einem Fahrerhaus (2) und einem hinter dem Fahrerhaus (2) angebrachten Lastbehälter (3) od.dgl., der mittels eines von druckmittelbeaufschlagten Stelltrieben betätigten Scherenhubwerkes (4, 5) über die Höhe des Fahrerhauses hinaus anhebbar ist, wobei am Fahrgestell (1) bzw. Lastbehälter (3) die fahrerhausseitigen Enden der Scherenschenkel (4,5) angelenkt und die vom Fahrerhaus (2) abweisenden Enden der Scherenschenkel (4, 5) an Längsführungen (12, 13) verstellbar gelagert sind und vorzugsweise ein zumindest mit dem über das Fahrerhaus (2) angehobenen Lastbehälter (3) heb- unmd senkbarer, teleskopisch über das Fahrerhaus (2) ausschiebbarer Ladeausleger (14) vorgesehen ist, dadurch gekennzeichnet, daß eine die Schere (4, 5) des Scherenhubwerkes in wenigstens einer Ausfahrstellung gegen Einfahren sichernde Stütze (17), insbesondere ein an dem einen Scherenschenkel (5) ein- und in die Arbeitsstellung ausschwenkbar gelagerter, mit einem am anderen Scherenschenkel (4) an der gleichen Seite des Scherengelenkes angebrachten Anschlag (19) zusammenwirkender Distanzhalter vorgesehen ist, und daß vorzugsweise der Distanzhalter über einen eigenen Stelltrieb (18) bei ausgefahrenem Ladeausleger (14) in die Arbeitsstellung ausschwenkbar ist.

2. Hubfahrzeug nach Anspruch 1, dadurch gekennzeichnet, daß der als Stütze ausgebildete Distanzhalter (17) an einer Querachse (16) des einen verstellbar geführten Scherenschenkelendes aus dem Scherenschenkel (5) ausklappbar lagert und der Gegenanschlag aus einer entsprechenden Querachse (19) am anderen, verstellbar geführten Scherenschenkelende gebildet ist, wobei die Stütze an ihrem freien Ende Aufnahmen für diese den Anschlag bildende Querachse trägt.

3. Hubfahrzeug nach Anspruch 1 oder 2, dadurch gekennzeichnet, daß für den den Ladeausleger (14) verstellenden Stelltrieb (15) und den Stelltrieb (18) des Distanzhalters (17) eine gemeinsame Steuereinrichtung vorgesehen ist, die beim Ausfahren des Ladeauslegers den Stelltrieb des Distanzhalters im Sinne des Ausschwenkens in die Arbeitsstellung und nur bei voll eingefahrenem Ladeausleger im Sinne der Rückstellung ansteuert.

**FIG.1**

EP 0 336 928 A2

FIG. 2

EP 0 336 928 A2